# EUROPÄISCHE PATENTSCHRIFT

(11) **EP 4 387 880 B1**
(45) Veröffentlichungstag und Bekanntmachung des Hinweises auf die Patenterteilung: **08.04.2026**
(21) Anmeldenummer: 22762069.7
(22) Anmeldetag: 09.08.2022
(51) Int. Cl.: B60W 40/06, G01C 21/00

(54) **VERFAHREN UND VORRICHTUNG ZUM ERMITTELN UND CHARAKTERISIEREN VON FAHRBAHNUNEBENHEITEN**
METHOD AND DEVICE FOR DETERMINING AND CHARACTERIZING ROAD UNEVENNESS
PROCÉDÉ ET DISPOSITIF POUR DÉTERMINER ET CARACTÉRISER DES IRRÉGULARITÉS D'UNE CHAUSSÉE

(30) Priorität: 19.08.2021 DE 102021209136
(43) Veröffentlichungstag der Anmeldung: 26.06.2024
(73) Patentinhaber: Robert Bosch GmbH, 70442 Stuttgart (DE)
(72) Erfinder: HOFFMANN, Andreas, 74182 Obersulm (DE); SUNKARA, Devi Raj, Bangalore, Karnataka 560062 (IN); SCHEUING, Jan, 74541 Vellberg (DE)
(86) Internationale Anmeldenummer: PCT/EP2022/072374
(87) Internationale Veröffentlichungsnummer: WO 2023/020899

(56) Entgegenhaltungen:
- DE-A1- 102013 225 586
- DE-A1- 102015 010 576
- DE-A1- 102017 223 634
- DE-C1- 4 329 745

## Beschreibung

Die vorliegende Erfindung betrifft ein Verfahren und eine Vorrichtung zum Ermitteln und Charakterisieren von Fahrbahnunebenheiten.

### Stand der Technik

Fahrbahnunebenheiten, etwa in Form von Schlaglöchern, treten häufig auf und stellen ein Sicherheitsrisiko für Kraftfahrzeuge dar. Wie groß das Sicherheitsrisiko ist, hängt hauptsächlich von Form und Größe der Fahrbahnunebenheiten ab. Zweiradfahrer gelten besonders als Gefährdungsgruppe. Außerdem verursachen Fahrbahnunebenheiten auch Unannehmlichkeiten für die Fahrer und Passagiere in den Kraftfahrzeugen. Es fehlen jedoch zuverlässige und regionalspezifische Daten über das Vorliegen und die Art solcher Fahrbahnunebenheiten. Eine Erstellung von Gefahrenkarten wird etwa in der DE 10 2010 055370 A1 beschrieben.

Zur Erkennung, Schätzung und Kartierung von Fahrbahnunebenheiten können Sensordaten von Lidar-, Radar- oder Kamerasensoren herangezogen werden. Mittels Erkennungs- und Schätzungsverfahren werden Straßenschäden erkannt, wobei die Verfahren maschinelle Lernalgorithmen umfassen können, die Bild- und Videodaten als Eingabe erhalten.

Die dabei verwendeten Sensoren erfüllen jedoch häufig nicht den ASIL-D-Standard (Automotive Safety Integration Level - D). Weiter ist der Anteil der Kraftfahrzeuge, die mit derartigen Sensoren ausgestattet sind, eher gering.

Weiter sind maschinelle Lernalgorithmen zur Erkennung und Einschätzung von Schlaglöchern anfällig für falsch-positive und falsch-negative Ergebnisse. Darüber hinaus verbrauchen die Algorithmen beträchtliche Rechenzeit-Ressourcen.

Das Gefährdungspotenzial einer Bodenunebenheit hängt insbesondere auch von der Form und Größe der Bodenunebenheit ab. Beispielsweise können Schlaglöcher mit stark abfallenden Kanten im Allgemeinen zu größeren Beschädigungen des Kraftfahrzeugs führen. Bei relativ glatten Übergängen ist das Gefährdungspotenzial hingegen geringer. Es besteht daher Bedarf, Bodenunebenheiten nicht nur zu erkennen, sondern auch genauer zu klassifizieren.

Aus der DE 10 2017 223634 A1 ist die Ermittlung eines Straßenzustandes durch Auswertung von Sensordaten bekannt. Die DE 43 29 745 C1 betrifft ein Verfahren zur frühzeitigen Erfassung von unerwarteten gefährlichen Fahrbahnverhältnissen. Die DE 10 2013 225586 A1 betrifft ein Verfahren zur Bewertung der Fahrbahnbeschaffenheit.

### Offenbarung der Erfindung

Die Erfindung stellt ein Verfahren und eine Vorrichtung zum Ermitteln und Charakterisieren von Fahrbahnunebenheiten mit den Merkmalen der unabhängigen Patentansprüche bereit. Bevorzugte Ausführungsformen sind Gegenstand der abhängigen Patentansprüche.

### Vorteile der Erfindung

Die Erfindung ermöglicht es, das Auftreten und die Schwere bzw. das Ausmaß von Fahrbahnunebenheiten zu erkennen und zu analysieren, indem insbesondere die Kantenform der Fahrbahnunebenheiten erkannt werden. Die Erfindung kann weiter dazu beitragen, eine umfassende Datenbank der Fahrbahnunebenheiten zu erstellen.

Moderne Kraftfahrzeuge verfügen über mehrere Sensoren, deren Daten von eingebetteten Systemen oder Kraftfahrzeugcomputern aus Sicherheits- und Komfortgründen genutzt werden. Raddrehzahlsensoren gehören zu den am häufigsten verwendeten Sensoren.

Hochfrequenz-Raddrehzahlsensoren liefern Informationen über den genauen Zustand des Rades. Diese Sensoren gehören auch zu den wenigen Sensoren, die den ASIL-D-Standard erfüllen, sodass sie im Vergleich zu anderen Sensoren sehr zuverlässig sind.

Weiter sind Raddrehzahlsensoren sehr weit verbreitet. Darüber hinaus sind die Raddrehzahlsensoren diejenigen Sensoren, welche der Fahrbahn am nächsten sind, da sie direkt am Rad angebracht sind. Dadurch ergibt sich eine hohe Zuverlässigkeit aufgrund der Nähe der Sensoren zur Straßenoberfläche.

Weiter sind immer häufiger radindividuelle Beschleunigungssensoren vorgesehen. Im Unterschied zu fahrzeugfesten Inertialsensoren, welche nicht an beweglichen Teilen das Kraftfahrzeugs angeordnet sind, bewegen sich die radindividuellen Beschleunigungssensoren mit den Rädern mit. Dadurch kann die genaue momentane Beschleunigung für jedes einzelne Rad erkannt werden.

Speziell ist auch eine Kombination aus Raddrehzahlsensor und Beschleunigungssensor am Rad vorteilhaft.

Bei dem Kraftfahrzeug kann es sich um ein Zweirad, Dreirad, einen Personenkraftwagen, Lastkraftwagen, ein Motorrad oder dergleichen handeln. Das Kraftfahrzeug kann beispielsweise auch ein Flugzeug sein, etwa um Schäden einer Start- und Landebahn zu erkennen.

Unter einem Ermitteln der Fahrbahnunebenheit kann insbesondere verstanden werden, dass das Vorhandensein der Fahrbahnunebenheit erkannt wird. Unter einem Charakterisieren kann darüber hinaus verstanden werden, dass zusätzliche Eigenschaften (über das bloße Vorhandensein hinaus) ermittelt werden. Insbesondere wird dabei die Kantenform der Fahrbahnunebenheit ermittelt.

Unter einer Kantenform der Fahrbahnunebenheit wird die Form einer Kante der Fahrbahnunebenheit verstanden, wobei es sich um eine beim Befahren der Fahrbahnunebenheit auftretende Kante und/oder eine beim Verlassen der Fahrbahnunebenheit auftretende Kante handeln kann. Bei der Kante kann es sich somit um einen Kontaktbereich der Fahrbahnunebenheit mit der Fahrbahn handeln. Mögliche Kantenformen können etwa steile Kanten, abgerundete Kanten oder rampenförmige (abgewinkelte) Kanten umfassen

Die Kantenform kann durch die Steigung (Steilheit) relativ zur Fahrbahn beschrieben werden. Die Steigung kann durch einen Winkel zwischen der Fahrbahn und der Fahrbahnunebenheit beschrieben werden. Je steiler die Kante relativ zur Fahrbahn abfällt, desto höher ist die Gefahr für Beschädigungen des Kraftfahrzeugs.

Im Rahmen dieser Erfindung können Fahrbahnunebenheiten Straßenschäden umfassen, etwa Schlaglöcher, Vertiefungen oder Erhöhungen, Spurrillen, jedoch auch gewollte Fahrbahnunebenheiten, etwa Geschwindigkeitsschwellen, Rampen und Ähnliches.

Die Recheneinrichtung liegt bevorzugt nahe der Datenquelle bzw. der Sensorik, z.B. integriert in einem Steuergerät eines Bremsregelsystems, um die Sensorwerte möglichst ungefiltert verarbeiten zu können.

Der Raddrehzahlsensor erfasst etwa anhand eines Hallsensors in Abhängigkeit von einer Bewegung eines an einem Rad des Kraftfahrzeugs angeordneten Impulsrades Impulse. Die Recheneinrichtung ermittelt anhand von Änderungen der erfassten Impulse in Abhängigkeit von der Zeit, das heißt anhand der vom Impulsrad ausgehenden Rohsignale der sich abwechselnden magnetischen Feldern (Nord / Süd), einen winkelförmigen Verlauf einer hochfrequenten Raddrehzahl. Unter einem winkelförmigen Verlauf der Raddrehzahl ist dabei die Änderung der Raddrehzahl in Abhängigkeit von dem Winkel zu verstehen. Dies kann mittels Ermittlung der Zeitdifferenz zwischen den einzelnen Impulsen erfolgen. Die Recheneinrichtung erkennt die Kantenform der Fahrbahnunebenheiten anhand des ermittelten winkelförmigen Verlaufs der Raddrehzahl. So führen Fahrbahnunebenheiten meist zu einer kurzfristigen Änderung der Raddrehzahl, da das Rad des Kraftfahrzeugs beim Befahren der Fahrbahnunebenheit beschleunigt oder verlangsamt wird. Dasselbe gilt beim Verlassen der Fahrbahnunebenheit. Durch Erkennen dieser Änderung der Raddrehzahl kann die Recheneinrichtung die Fahrbahnunebenheit ermitteln und darüber hinaus auch die Kantenform ermitteln. Insbesondere zeichnen sich unterschiedlich steile Kanten durch unterschiedliche charakteristische winkelförmige Verläufe der Raddrehzahl aus. Durch Auswertung des winkelförmigen Verlaufs kann dadurch die Kantenform bestimmt werden.

Im Vergleich zu einem zeitlichen Verlauf der Raddrehzahl bietet der winkelförmige Verlauf, welcher sich aus den Impulswechsel über der Zeit ergibt, deutliche Vorteile hinsichtlich Präzision von kleinen Änderungen in der Fahrbahnoberflächenbeschaffenheit Beispielsweise kann vorgesehen sein, die Anzahl von Impulsen in einem Zeitraum von einer vorgegebenen Dauer, beispielsweise von kleiner oder gleich 1 ms, zu ermitteln. Das Verarbeiten der Sensorrohsignale in der Recheneinrichtung ermöglicht die Erkennung und präzise Vermessung von bereits geringfügigen Änderungen in der Fahrbahnoberflächenbeschaffenheit

Gemäß einer weiteren Ausführungsform des Verfahrens zum Ermitteln und Charakterisieren von Fahrbahnunebenheiten ermittelt die Recheneinrichtung Fahrbahnunebenheiten, falls ein Betrag einer winkelförmigen Änderung der Raddrehzahl einen ersten Schwellenwert überschreitet Der Schwellenwert kann dabei von einer Kraftfahrzeuggeschwindigkeit abhängen. Weiter ermittelt die Recheneinrichtung die Kantenform durch Vergleich des Betrags der winkelförmigen Änderung der Raddrehzahl mit mindestens einem zweiten Schwellenwert, wobei der mindestens zweite Schwellenwert größer ist als der erste Schwellenwert. Beispielsweise kann vorgesehen sein, zwischen n verschiedenen Kantenformen zu unterscheiden, wobei n eine natürliche Zahl ist. Es werden dann inklusive des ersten Schwellenwertes insgesamt n Schwellenwerte vorgesehen. Beispielsweise soll zwischen einer scharfen (steilen) Kante, einer abgerundeten Kante und einer rampenförmigen Kante unterschieden werden. Überschreitet der Betrag der winkelförmigen Änderung der Raddrehzahl den ersten Schwellenwert, ist jedoch kleiner als ein zweiter Schwellenwert, wird erkannt, dass eine Kante vorliegt, und diese wird als abgerundete Kante charakterisiert. Überschreitet der Betrag der winkelförmigen Änderung der Raddrehzahl den zweiten Schwellenwert, ist jedoch kleiner als ein dritter Schwellenwert, wird erkannt, dass es sich um eine rampenförmige Kante handelt. Überschreitet der Betrag der winkelförmigen Änderung der Raddrehzahl schließlich den dritten Schwellenwert, wird erkannt, dass es sich um eine scharfe Kante handelt.

Gemäß einer weiteren Ausführungsform des Verfahrens zum Ermitteln und Charakterisieren von Fahrbahnunebenheiten umfassen die Sensordaten des mindestens einen radindividuellen Beschleunigungssensors eine Vertikalbeschleunigung des jeweiligen Rades entlang einer Vertikalachse des Kraftfahrzeugs, wobei die Recheneinrichtung die Kantenform der Fahrbahnunebenheit in Abhängigkeit von einem zeitlichen Verlauf der Vertikalbeschleunigung ermittelt. Je größer die Vertikalbeschleunigung, desto steiler wird im Allgemeinen die Kante abfallen.

Gemäß einer weiteren Ausführungsform des Verfahrens zum Ermitteln und Charakterisieren von Fahrbahnunebenheiten wird eine Fahrbahnunebenheit ermittelt, falls ein Betrag der Vertikalbeschleunigung einen ersten Schwellenwert überschreitet, und die Kantenform wird durch Vergleich des Betrags der Vertikalbeschleunigung mit mindestens einem zweiten Schwellenwert ermittelt. Analog zum Fall des Betrages der winkelförmigen Änderung der Raddrehzahl können wieder n Kantenformen unterschieden werden, wobei inklusive des ersten Schwellenwertes insgesamt n Schwellenwerte festgelegt werden.

Gemäß einer weiteren Ausführungsform des Verfahrens zum Ermitteln und Charakterisieren von Fahrbahnunebenheiten berechnet die Recheneinrichtung anhand der von dem Raddrehzahlsensor erzeugten Sensordaten ein Frequenzverhalten der Raddrehzahl und/oder einer Vertikalbeschleunigung des Rades des Kraftfahrzeugs, wobei die Recheneinrichtung die Fahrbahnunebenheiten anhand des berechneten Frequenzverhaltens der Raddrehzahl und/oder der Vertikalbeschleunigung ermittelt. So kann eine Fahrbahnunebenheit ermittelt werden, falls mindestens eine vorgegebene Frequenz im Frequenzverhalten auftritt. Das Frequenzverhalten kann auch mit vorgegebenen Frequenzmustern abgeglichen werden, um eine Fahrbahnunebenheit zu ermitteln und die Kantenform zu bestimmen.

Gemäß einer weiteren Ausführungsform des Verfahrens zum Ermitteln und Charakterisieren von Fahrbahnunebenheiten bestimmt die Recheneinrichtung weiter eine Art und/oder Beschaffenheit der Fahrbahnunebenheiten anhand der Sensordaten. Eine Art der Fahrbahnunebenheit kann etwa ein Schlagloch, eine Vertiefung, eine Erhöhung, eine Geschwindigkeitsschwelle, Rampe oder dergleichen sein. Unter einer Beschaffenheit der Fahrbahnunebenheit kann eine räumliche Ausdehnung verstanden werden, etwa eine Tiefe, Breite und Länge eines Schlaglochs.

Gemäß einer weiteren Ausführungsform des Verfahrens zum Ermitteln und Charakterisieren von Fahrbahnunebenheiten umfasst das Charakterisieren der Fahrbahnunebenheit das Ermitteln einer Tiefe und/oder Höhe (z.B. in Zentimeter) der Fahrbahnunebenheit anhand einer Amplitude einer Änderung der Raddrehzahl und/oder Vertikalbeschleunigung. Die Amplitude der sich in diesem Moment ändernden hochfrequenten Raddrehzahl und/oder Vertikalbeschleunigung entspricht der Tiefe bzw. Höhe einer Fahrbahnunebenheit.

Gemäß einer weiteren Ausführungsform des Verfahrens zum Ermitteln und Charakterisieren von Fahrbahnunebenheiten erfasst der Raddrehzahlsensor in Abhängigkeit von einer Bewegung eines an einem Rad des Kraftfahrzeugs angeordneten Impulsrades Impulse, wobei das Charakterisieren der Fahrbahnunebenheit das Ermitteln einer Länge der Fahrbahnunebenheit anhand einer Anzahl von Änderungen der Impulse im Zeitraum zwischen Befahren und Verlassen der Fahrbahnunebenheiten umfasst.

Gemäß einer weiteren Ausführungsform des Verfahrens zum Ermitteln und Charakterisieren von Fahrbahnunebenheiten umfasst das Ermitteln der Fahrbahnunebenheit das Ermitteln einer Position der Fahrbahnunebenheit relativ zu einem Referenzpunkt des Kraftfahrzeugs anhand einer ermittelten Kurvenfahrt und/oder Einzelradauswertung. Dadurch kann die Breite der Fahrbahnunebenheit bestimmt werden.

Gemäß einer weiteren Ausführungsform des Verfahrens zum Ermitteln und Charakterisieren von Fahrbahnunebenheiten können für verschiedene Kantenformen der Fahrbahnunebenheiten Frequenzmuster der Raddrehzahlamplituden und der Anzahl der Impulsänderungen in einem bestimmten Zeitraum hinterlegt werden, welche etwa bei Testfahrten unter vorgegebenen Bedingungen generiert werden. Durch Vergleich des momentanen ermittelten Frequenzmusters oder Amplitudenausschlages mit den hinterlegten Frequenzmustern kann dann die Kantenform der Fahrbahnunebenheit ermittelt werden.

Gemäß einer weiteren Ausführungsform des Verfahrens zum Ermitteln und Charakterisieren von Fahrbahnunebenheiten kann die Tiefe der Fahrbahnunebenheit, etwa eines Schlaglochs, ermittelt werden, indem die Amplitude des Gradienten, d. h. der zeitlichen Veränderung der Raddrehzahl betrachtet wird. Je größer die Amplitude, desto tiefer das Schlagloch. Anhand einer vorgegebenen Abhängigkeit, etwa einer Look-up-Tabelle, kann anhand der zeitlichen Veränderung der Raddrehzahl die Tiefe der Fahrbahnunebenheit ermittelt werden. Dabei können auch weitere Parameter, etwa die momentane Geschwindigkeit des Kraftfahrzeugs berücksichtigt werden.

Gemäß einer weiteren Ausführungsform des Verfahrens zum Ermitteln und Charakterisieren von Fahrbahnunebenheiten ermittelt und/oder charakterisiert die Recheneinrichtung die Fahrbahnunebenheiten weiter unter Berücksichtigung einer Fahrsituation und/oder eines Fahrereignisses. Bei dem Fahrereignis kann es sich etwa um ein Bremsereignis, Beschleunigungsereignis oder Lenkereignis handeln. Bei der Fahrsituation kann etwa die momentane Geschwindigkeit des Kraftfahrzeugs berücksichtigt werden.

Anhand der Fahrsituation oder des Fahrereignisses können Falsch-positive-Detektionen reduziert werden, indem etwa bei einer starken Beschleunigung oder Verzögerung Schwellenwerte zum Erkennen der Bodenunebenheiten erhöht werden, um zu verhindern, dass durch die Beschleunigung oder Verzögerung selbst bereits eine Bodenunebenheit erkannt wird.

Anhand der Fahrsituation oder des Fahrereignisses kann jedoch auch erkannt werden, dass eine Fahrbahnunebenheit zu erwarten ist. Erkennt der Fahrer etwa ein Schlagloch, bremst er üblicherweise ab, sodass das Vorliegen eines Bremsereignisses etwa zum Plausibilisieren der erkannten Bodenunebenheit herangezogen werden kann. So kann beispielsweise eine Wahrscheinlichkeit für das Vorliegen einer bestimmten Bodenunebenheit berechnet werden. Diese wird beim Vorliegen eines Bremsereignisses erhöht.

Gemäß einer weiteren Ausführungsform des Verfahrens zum Ermitteln und Charakterisieren von Fahrbahnunebenheiten ermittelt die Recheneinrichtung die Kantenform der Fahrbahnunebenheit unter Verwendung eines Maschinenlernmodells und/oder statistischen Modells, welches von den Sensordaten abhängige Eingangsdaten empfängt.

Die Eingangsdaten können beispielsweise die Sensordaten selbst sein. Die Sensordaten können jedoch auch zuerst vorverarbeitet werden, bevor sie dem Maschinenlernmodell und/oder statistischen Modell bereitgestellt werden.

Das Maschinenlernmodell kann anhand von Trainingsdaten vorab trainiert werden. Gemäß einer Ausführungsform kann vorgesehen sein, dass das Maschinenlernmodell während des Betriebs in Echtzeit Bodenunebenheiten ermittelt und/oder charakterisiert.

Gemäß einer weiteren Ausführungsform des Verfahrens zum Ermitteln und Charakterisieren von Fahrbahnunebenheiten erhält das Maschinenlernmodell einen zeitlichen Verlauf mindestens einer Raddrehzahl und/oder ein Frequenzverhalten der Raddrehzahl als Eingangswerte. Das Maschinenlernmodell gibt eine Größe aus, welche einer Wahrscheinlichkeit des Vorliegens einer Bodenunebenheiten entspricht Das Maschinenlernmodell kann auch trainiert sein, verschiedene Arten und/oder Beschaffenheiten von Bodenunebenheiten zu klassifizieren. Beispielsweise kann das Maschinenlernmodell die Kantenform bestimmen. Dazu kann etwa eine Kantenform aus einer vorgegebenen Menge an Kantenformen ermittelt werden (etwa scharfe Kante, runde Kante, Rampe). Die Kantenform kann auch als kontinuierlicher Parameter bestimmt werden, etwa zwischen 0 und 1, wobei 0 einem flachen Übergang (runde Kante) entspricht, und 1 einer steilen Kante (etwa einem senkrechten Abfall).

Gemäß einer weiteren Ausführungsform des Verfahrens zum Ermitteln und Charakterisieren von Fahrbahnunebenheiten erhält das Maschinenlernmodell sowohl Sensordaten des mindestens einen Raddrehzahlsensors als auch Sensordaten des mindestens einen radindividuellen Beschleunigungssensors als Eingangsdaten. Diese Daten können parallel angegeben werden oder vor dem Eingeben in das Maschinenlernmodells fusioniert werden.

Gemäß einer weiteren Ausführungsform des Verfahrens zum Ermitteln und Charakterisieren von Fahrbahnunebenheiten sind zwei Maschinenlernmodelle vorgesehen, wobei ein erstes Maschinenlernmodell die Kantenform der Fahrbahnunebenheit anhand der Sensordaten des mindestens einen Raddrehzahlsensors ermittelt und ein zweites Maschinenlernmodell die Kantenform der Fahrbahnunebenheit anhand der Sensordaten des mindestens einen radindividuellen Beschleunigungssensors ermittelt. Die Ausgaben des ersten Maschinenlernmodells und des zweiten Maschinenlernmodells können anschließend fusioniert werden, um die Kantenform der Fahrbahnunebenheit letztendlich zu ermitteln. Durch Kombination verschiedener Sensordaten kann die Genauigkeit verbessert werden.

Gemäß einer weiteren Ausführungsform des Verfahrens zum Ermitteln und Charakterisieren von Fahrbahnunebenheiten ist die Recheneinrichtung eine externe Recheneinrichtung, d. h. außerhalb des Kraftfahrzeugs angeordnet. Beispielsweise kann die Auswertung in einer Cloud erfolgten. Die Sensordaten können dabei über eine Schnittstelle des Kraftfahrzeugs an die Recheneinrichtung ausgegeben werden.

Gemäß einer weiteren Ausführungsform des Verfahrens zum Ermitteln und Charakterisieren von Fahrbahnunebenheiten ist die Recheneinrichtung eine interne Recheneinrichtung, d. h. in dem Kraftfahrzeug angeordnet. Beispielsweise ist die Recheneinrichtung eine Steuereinrichtung des Kraftfahrzeugs oder eines Teilsystems des Kraftfahrzeugs. Beispielsweise kann die Recheneinrichtung die Steuereinrichtung eines Antiblockiersystems des Kraftfahrzeugs sein.

Gemäß einer weiteren Ausführungsform ist die Ermittlung und/oder Charakterisierung von Fahrbahnunebenheiten am Rand eines Computer-Netzwerks implementiert (Edge Computing), wobei das Computer-Netzwerk eine beliebige Kombination von elektronischen Steuereinheiten, Kraftfahrzeugcomputern, Verbindungssteuereinheiten und Clouds umfasst In diesem Verbund ist dann auch die Fahrzeugposition als Information verfügbar. In der Kombination mit der erkannten Fahrbahnunebenheit lässt sich dies dann auch Kartieren.

Gemäß einer weiteren Ausführungsform des Verfahrens zum Ermitteln und Charakterisieren von Fahrbahnunebenheiten bei dem Erkennen von Straßenschäden wird eine Information über eine Anzeigeeinrichtung des Kraftfahrzeugs an einen Fahrer des Kraftfahrzeugs ausgegeben. Insbesondere kann die Information das Auftreten der Fahrbahnunebenheit und/oder Details bezüglich der Fahrbahnunebenheit umfassen, etwa eine Art und/oder Beschaffenheit der Fahrbahnunebenheit.

Gemäß einer weiteren Ausführungsform des Verfahrens zum Ermitteln und Charakterisieren von Fahrbahnunebenheiten kann die Recheneinrichtung die Sensordaten verschiedener Raddrehzahlsensoren und/oder radindividueller Beschleunigungssensoren verschiedener Räder miteinander vergleichen. Tritt eine Änderung der Raddrehzahl bzw. Beschleunigung beispielsweise nur bei den Raddrehzahlsensoren und/oder radindividuellen Beschleunigungssensoren auf einer Seite des Kraftfahrzeugs auf, kann die Recheneinrichtung ermitteln, dass die Fahrbahnunebenheit im Bereich der entsprechenden Seite des Kraftfahrzeugs lokalisiert ist. Die Recheneinrichtung kann dann beispielsweise ein Schlagloch erkennen.

Tritt eine Änderung der Raddrehzahl bzw. Beschleunigung bei den Raddrehzahlsensoren und/oder radindividuellen Beschleunigungssensoren auf beiden Seiten des Kraftfahrzeugs auf, kann die Recheneinrichtung ermitteln, dass die Fahrbahnunebenheit ausgedehnt ist. Die Recheneinrichtung kann dann beispielsweise eine Geschwindigkeitsschwelle erkennen.

Gemäß einer weiteren Ausführungsform des Verfahrens zum Ermitteln und Charakterisieren von Fahrbahnunebenheiten kann die Recheneinrichtung auch den Lenkwinkel des Kraftfahrzeugs berücksichtigen. Durchfährt das Kraftfahrzeug eine Kurve, überschreitet der Lenkwinkel somit eine vorgegebenen Schwellenwert, und wenn die Recheneinrichtung ermittelt, dass nur einer der Raddrehzahlsensoren und/oder radindividuellen Beschleunigungssensoren der Räder eine signifikante Änderung der Raddrehzahl bzw. Beschleunigung oberhalb eines Schwellenwert misst, kann die Recheneinrichtung ein Schlagloch erkennen. In diesem Fall ist zu erwarten, dass aufgrund des Lenkwinkels nur ein Rad des Kraftfahrzeugs durch das Schlagloch fährt. Bei einer ausgedehnten Fahrbahnunebenheit werden mehrere Räder eine signifikante Änderung der Raddrehzahl bzw. Beschleunigung oberhalb eines Schwellenwert messen.

Gemäß einer weiteren Ausführungsform des Verfahrens zum Ermitteln und Charakterisieren von Fahrbahnunebenheiten berechnet die Recheneinrichtung anhand der Sensordaten eine Länge der Fahrbahnunebenheit So kann die Recheneinrichtung aufgrund einer ersten Änderung der Raddrehzahl und/oder Beschleunigung ein Befahren der Fahrbahnunebenheit erkennen und anhand einer zweiten Änderung der Raddrehzahl und/oder Beschleunigung ein Verlassen der Fahrbahnunebenheit erkennen. Unter Berücksichtigung der Fahrzeuggeschwindigkeit kann die Recheneinrichtung die Länge der Fahrbahnunebenheit ermitteln. Die Anzahl der Impulsänderungen zwischen dem Zeitpunkt des Befahrens der Fahrbahnunebenheit und dem Verlassen dieser entspricht der Länge z.B. in Zentimeter.

Gemäß einer weiteren Ausführungsform des Verfahrens zum Ermitteln und Charakterisieren von Fahrbahnunebenheiten berechnet die Recheneinrichtung durch Mitteln der Raddrehzahl über einen vorgegebenen Zeitraum eine gemittelte Raddrehzahl. Die Recheneinrichtung ermittelt eine Fahrbahnunebenheit, falls eine Abweichung einer momentanen Raddrehzahl von der gemittelten Raddrehzahl einen Schwellenwert überschreitet.

Gemäß einer weiteren Ausführungsform des Verfahrens zum Ermitteln und Charakterisieren von Fahrbahnunebenheiten ermittelt die Recheneinrichtung das Vorliegen der Bodenunebenheiten unter Berücksichtigung der Sensordaten weiterer Sensoren, etwa Videosensoren, Lidarsensoren, Radarsensoren und dergleichen. Insbesondere kann die Recheneinrichtung das Vorliegen der Bodenunebenheiten anhand der zusätzlichen Sensordaten plausibilisieren. So kann anhand von Videodaten durch Objekterkennungsmethoden eine Art und/oder Beschaffenheit der Bodenunebenheiten ermittelt werden.

Gemäß einer weiteren Ausführungsform des Verfahrens zum Ermitteln und Charakterisieren von Fahrbahnunebenheiten kann mindestens ein Schwellenwert zum Ermitteln und/oder Charakterisieren der Fahrbahnunebenheit einstellbar sein. Dazu kann eine Schnittstelle vorgesehen sein, etwa durch bidirektionale Kommunikation zwischen dem Kraftfahrzeug und einer Cloud.

Gemäß einer weiteren Ausführungsform des Verfahrens zum Ermitteln und Charakterisieren von Fahrbahnunebenheiten werden die Daten bezüglich der Fahrbahnunebenheiten zum Erzeugen einer geografischen Karte zusammengeführt. Insbesondere können auf einer Straßenkarte die Fahrbahnunebenheiten und optional die Art und/oder Beschaffenheit der Fahrbahnunebenheiten vermerkt werden. Das Erzeugen der geografischen Karte kann unter Verwendung statistikbasierter und/oder auf maschinellem Lernen basierender Algorithmen in einer Cloud erfolgen. Die geografische Karte kann dynamisch aktualisiert werden.

Gemäß einer weiteren Ausführungsform des Verfahrens zum Ermitteln und Charakterisieren von Fahrbahnunebenheiten können die Sensordaten von internen oder externen Beschleunigungssensoren zur Erkennung von Vibrationen in drei Dimensionen herangezogen werden. Mittels statistischer Verfahren oder maschineller Lernmodelle können Fahrbahnunebenheiten erkannt werden.

### Kurze Beschreibung der Zeichnungen

Es zeigen:
- Figur 1: ein schematisches Blockdiagramm einer Vorrichtung zum Ermitteln und Charakterisieren von Fahrbahnunebenheiten gemäß einer Ausführungsform der Erfindung;
- Figur 2: ein schematisches Blockdiagramm eines Kraftfahrzeugs mit einer erfindungsgemäßen Vorrichtung zum Ermitteln und Charakterisieren von Fahrbahnunebenheiten;
- Figur 3: eine schematische Darstellung zur Erläuterung der Änderung der Raddrehzahl beim Überfahren von Bodenunebenheiten;
- Figur 4: schematische Verläufe von Raddrehzahlen und Beschleunigungen für verschiedene Kantenformen; und
- Figur 5: ein Flussdiagramm eines Verfahrens zum Ermitteln und Charakterisieren von Fahrbahnunebenheiten gemäß einer Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

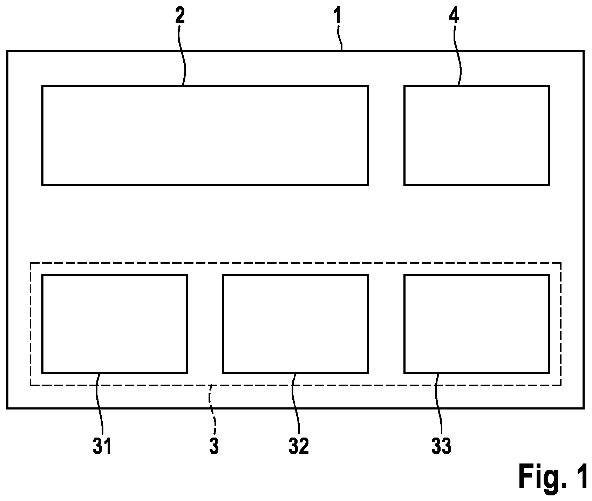

Figur 1 zeigt ein schematisches Blockdiagramm einer Vorrichtung 1 zum Ermitteln und Charakterisieren von Fahrbahnunebenheiten. Die Vorrichtung 1 umfasst eine Schnittstelle 2, welche etwa über einen Kraftfahrzeugkommunikationsbus mit mindestens einem Raddrehzahlsensor und/oder mindestens einem radindividuellen Beschleunigungssensor gekoppelt ist. Die Vorrichtung 1 kann weiter mit verschiedenen internen Sensoren eines Bremssystems des Kraftfahrzeugs verbunden sein. Zusätzlich können auch systemexterne Sensoren angeschlossen werden, z. B. über den Kraftfahrzeugkommunikationsbus.

Die Schnittstelle 2 kann auch eine drahtlose Verbindung sein, um mit dem Kraftfahrzeug gekoppelt zu sein. Die Vorrichtung 1 kann somit entweder in dem Kraftfahrzeug angeordnet sein oder auch eine externe Vorrichtung sein.

Die Vorrichtung 1 umfasst weiter eine Recheneinrichtung 3, welche anhand der über die Schnittstelle 2 empfangenen Sensordaten Fahrbahnunebenheiten ermittelt und charakterisiert. Die Recheneinrichtung 3 kann einen oder mehrere elektronische Prozessoren umfassen, etwa einen programmierbaren Mikroprozessor, Mikrocontroller oder dergleichen. Weiter umfasst die Vorrichtung 1 einen nichttransitorischen, maschinenlesbaren Speicher 4, um die empfangenen Sensordaten zu speichern. Die Recheneinrichtung 3 kann den Speicher 4 lesen und beschreiben.

Die Recheneinrichtung 3 kann eine erste Einheit 31 zur Datenerfassung, eine zweite Einheit 32 zur Vorverarbeitung der Sensordaten und eine dritte Einheit 33 zur Ermittlung der Fahrbahnunebenheiten umfassen. Die ersten bis dritten Einheiten 31 bis 33 können als separate elektronische Prozessoren ausgestaltet sein oder auch durch denselben elektronischen Prozessor oder eine Kombination elektronischer Prozessoren implementiert sein.

In der Phase der Datenerfassung erfasst die Vorrichtung 1 die Signale von dem mindestens einen Sensor nahezu in Echtzeit. Die von der mindestens einen Sensor empfangenen Daten liegen im Rohformat vor, wie z.B. Drehzahlimpulse von den Raddrehzahlsensoren oder Vertikalbeschleunigungen der Räder des Fahrzeugs von den radindividuellen Beschleunigungssensoren. Diese Signale werden über die Schnittstelle 2 erfasst und von der ersten Einheit 31 beispielsweise in den Speicher 4 geschrieben.

In der Vorverarbeitungsphase werden die rohen Sensordaten durch die zweite Einheit 32 bereinigt und verarbeitet, um hochfrequente Raddrehzahldaten zu berechnen.

In der Phase der Berechnung des Modellalgorithmus werden die hochfrequenten Raddrehzahldaten von der dritten Einheit 33 verwendet, um die Fahrbahnunebenheiten zu erkennen. Die dritte Einheit 33 kann etwa aufgrund feinkalibrierter Schwellenwerte eines Modells die Straßenrauigkeit von Schlaglöchern und Bodenwellen unterscheiden. Außerdem kann die Art und/oder Beschaffenheit der Fahrbahnunebenheiten erkannt werden. Insbesondere werden Tiefe und/oder Länge und/oder Breite der Fahrbahnunebenheiten erkannt und ausgegeben. Die dritte Einheit 33 erkennt weiter die Kantenform der Fahrbahnunebenheit, etwa anhand eines Verlaufs der Raddrehzahl. Alternativ oder zusätzlich kann die dritte Einheit 33 zum Erkennen der Kantenform der Fahrbahnunebenheit einen Verlauf der Vertikalbeschleunigung des Rades bzw. der Räder berücksichtigen.

Die Informationen können über die Schnittstelle 2 ausgegeben werden, etwa an weitere Recheneinrichtungen des Kraftfahrzeugs oder an eine externe Cloud.

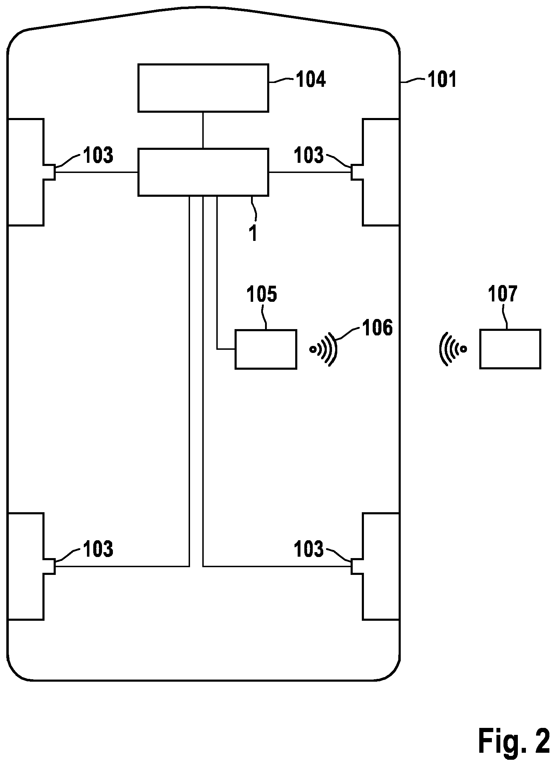

Figur 2 zeigt ein schematisches Blockdiagramm eines Kraftfahrzeugs 101 mit einer in Figur 1 beschriebenen Vorrichtung 1 zum Ermitteln und Charakterisieren von Fahrbahnunebenheiten. An den Rädern des Kraftfahrzeugs 101 ist jeweils ein Raddrehzahlsensor und/oder radindividueller Beschleunigungssensor 103 angeordnet, welche fest verdrahtet oder alternativ über den Kraftfahrzeug-Bus mit der Vorrichtung 1 und einem Kraftfahrzeugcomputer 104 verbunden sind. Die Vorrichtung 1 kann dabei ein elektronisches Steuergerät des Kraftfahrzeugs 101 sein.

Die Vorrichtung 1 ermittelt unter Verwendung der von den Raddrehzahlsensoren und/oder radindividuellen Beschleunigungssensoren 103 empfangenen Informationen eine Kraftfahrzeuggeschwindigkeit, einen Kilometerstand, einen Schlupf usw. Weiter ermittelt die Vorrichtung 1, wie oben beschrieben, die Fahrbahnunebenheiten sowie die Kantenform der Fahrbahnunebenheit.

Alternativ kann auch der Kraftfahrzeugcomputer 104 zum Ermitteln und Charakterisieren der Fahrbahnunebenheiten ausgebildet sein.

Die Informationen bezüglich der Fahrbahnunebenheiten können über einen Kommunikationsbus des Kraftfahrzeugs 101 weiter an eine Einrichtung 105 zur Kommunikation mit anderen Kraftfahrzeugen oder anderen externen Vorrichtungen (V2X-Einrichtung) gesendet werden. Diese Einrichtung 105 kann die Informationen speichern und/oder über einen drahtlosen Kommunikationskanal 106 an eine Cloud-Infrastruktur 107 übertragen. Der drahtlose Kommunikationskanal 206 kann z. B. ein Mobilfunknetz, eine Wi-Fi-Schnittstelle, eine Bluetooth-Schnittstelle usw. umfassen.

In der Cloud-Infrastruktur 107 können die Daten dann verwaltet, bereinigt, verarbeitet und visualisiert werden. Die Daten können etwa weiterverarbeitet werden, um eine geografische Karte zu erstellen, auf der die Informationen zu den Fahrbahnunebenheiten visualisiert werden. Es kann auch eine Tabelle oder ein Bericht über Schlaglöcher und Straßenunebenheiten erzeugt werden.

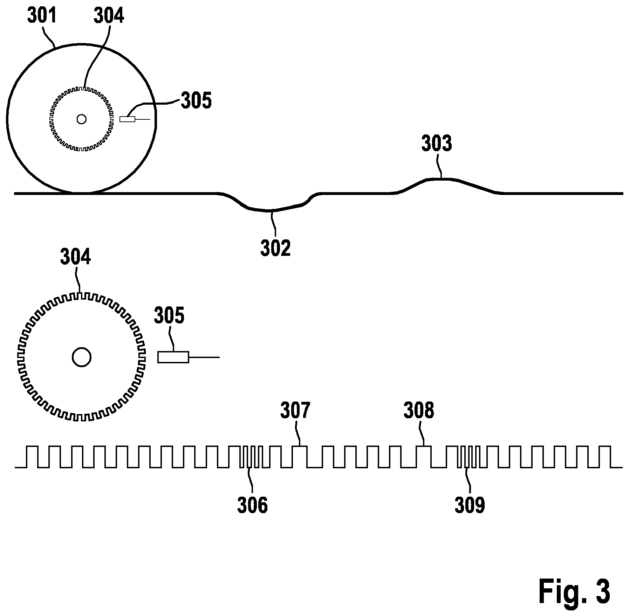

Figur 3 zeigt eine schematische Darstellung zur Erläuterung der Änderung der Raddrehzahl beim Überfahren von Bodenunebenheiten 302, 303 durch ein Kraftfahrzeug. Ein Raddrehzahlsensor ermittelt dabei die Raddrehzahl des Rades 301 mit Hilfe des Inkrementalgeberprinzips.

Ein Sensorelement 305 des Raddrehzahlsensors, etwa ein Hallsensor, ein anisotroper-magnetoresistiver-Effekt (AMR)-Sensor, eine Riesenmagnetowiderstand (GMR)-Sensor oder dergleichen, wird dem sich ändernden Magnetfeld eines rotierenden Encoders 304 ausgesetzt, der an einer Achse des Rades 301 montiert ist.

Die erfassten Änderungen des magnetischen Flusses werden als Drehzahlimpulse an die Recheneinrichtung 1 übermittelt. Die Recheneinrichtung 1 misst die Zeitdifferenzen zwischen benachbarten Drehzahlimpulsen und errechnet daraus (zusammen mit weiteren Kalibrierungsparametern, etwa der Anzahl der Impulse pro Umdrehung und dem Radumfang) die momentane hochfrequente Raddrehzahl.

Beim Einfahren und Verlassen eines Schlaglochs 302 oder einer Fahrbahnschwelle 303 tritt eine plötzliche Abweichung der momentanen hochfrequenten Raddrehzahl auf. Dies ist darauf zurückzuführen, dass das Rad 301 bei der Einfahrt in das Schlagloch 302 einen plötzlichen Anstieg 306 der Raddrehzahl erfährt. Umgekehrt erfährt das Rad 301 eine plötzliche Abnahme 307 der Drehzahl beim Verlassen des Schlaglochs 302.

Bei der Fahrbahnschwelle 303 verhält es sich umgekehrt, das heißt das Rad 301 erfährt bei der Einfahrt auf die Fahrbahnschwelle 303 eine plötzliche Abnahme 308 der Raddrehzahl. Umgekehrt erfährt das Rad 301 einen plötzlichen Anstieg 309 der Drehzahl beim Verlassen der Fahrbahnschwelle 303.

Die Amplitude der Abweichung (Wavelet-Amplitude) ist ein Maß für die Tiefe des Schlaglochs 302 bzw. der Höhe der Fahrbahnschwelle 303, und die Anzahl der Impulse zwischen Einfahrt und Ausfahrt entspricht einer Strecke, die die Länge des Schlaglochs darstellt.

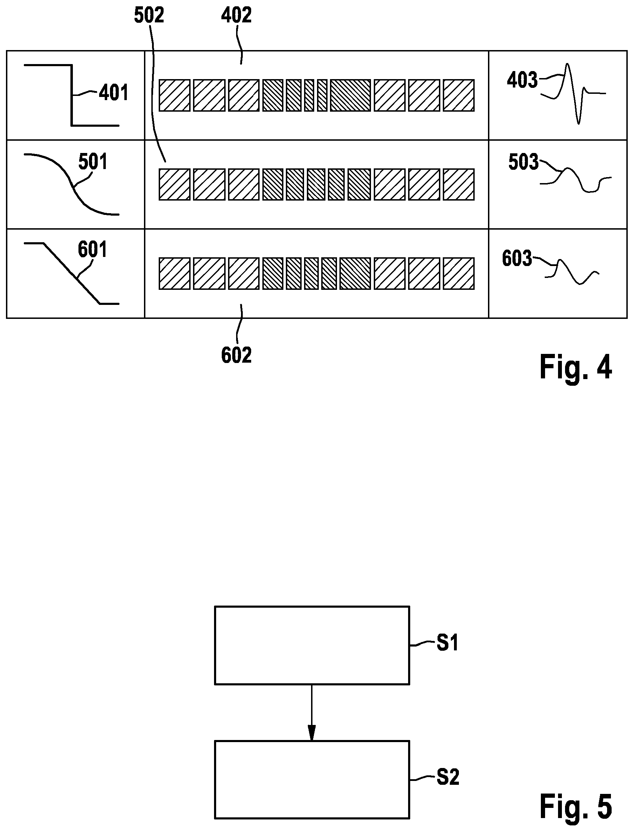

Figur 4 zeigt schematische Verläufe von Raddrehzahlen und Beschleunigungen für verschiedene Kantenformen, und zwar eine steile Kante 401, eine abgerundete Kante 501 und eine Rampe 601. Weiter sind der entsprechende Signalverlauf 402 des Raddrehzahlsensors 103 sowie der Signalverlauf 403 des Beschleunigungssensors 103 für die steile Kante dargestellt, sowie die entsprechenden Signalverläufe 502 und 503 für die abgerundete Kante und die Signalverläufe 602, 603 für die Rampe. Die Signalverläufe zeigen jeweils eine charakteristische Form auf, welche etwa durch Mustererkennung (etwa durch ein Maschinenlernmodell und/oder statistisches Modell) oder durch Vergleich mit Schwellenwerten erkannt werden können.

Figur 5 zeigt ein Flussdiagramm eines Verfahrens zum Ermitteln und Charakterisieren von Fahrbahnunebenheiten. Das Verfahren kann mit der oben beschriebenen Vorrichtung 1 durchgeführt werden. Umgekehrt kann die Vorrichtung 1 zur Durchführung der im Folgenden beschriebenen Verfahrensschritte ausgebildet sein.

In einem ersten Verfahrensschritt S1 werden Sensordaten durch mindestens einen Raddrehzahlsensor 103 und/oder mindestens einen radindividuellen Beschleunigungssensor 103 eines auf der Fahrbahn fahrenden Kraftfahrzeugs 101 erzeugt.

In einem zweiten Verfahrensschritt S2 ermittelt und charakterisiert eine Recheneinrichtung 3 unter Verwendung der erzeugten Sensordaten eine Fahrbahnunebenheit Die Recheneinrichtung 3 kann hierzu einen zeitlichen Verlauf der Raddrehzahl ermitteln. Zu Beginn der Fahrbahnunebenheit kann die Recheneinrichtung 3 insbesondere eine zeitliche Änderung der Raddrehzahl berechnen. Überschreitet diese einen Schwellenwert, wird die Fahrbahnunebenheit erkannt. Weiter ermittelt die Recheneinrichtung 3 die Kantenform der Fahrbahnunebenheit.

Die Recheneinrichtung 3 kann auch ein Frequenzverhalten der Raddrehzahl berechnen und heranziehen, um die Fahrbahnunebenheit zu ermitteln und zu charakterisieren.

Weiter kann vorgesehen sein, dass eine Fahrbahnunebenheit erkannt wird, falls eine Änderung der vertikalen Beschleunigung eines Rades einen vorgegebenen Schwellenwert überschreitet.

Das Ermitteln der Fahrbahnunebenheiten erfolgt mit einem Modellalgorithmus, welcher die Verarbeitung der rohen Sensordaten als Eingabe, die Ermittlung der momentanen hochfrequenten Raddrehzahl und die Überwachung dieser Raddrehzahl umfassen kann.

Weiter kann die Recheneinrichtung 3 aufgrund einer ersten Änderung der Raddrehzahl ein Befahren der Fahrbahnunebenheit erkennen und anhand einer zweiten Änderung der Raddrehzahl ein Verlassen der Fahrbahnunebenheit erkennen.

Unter Berücksichtigung der Fahrzeuggeschwindigkeit kann die Länge der Fahrbahnunebenheit ermittelt werden, indem die Anzahl der Impulse im Zeitraum zwischen dem Befahren und dem Verlassen der Fahrbahnunebenheit ermittelt wird.

Weiter kann die Tiefe der Fahrbahnunebenheit ermittelt werden, etwa indem die Amplitude der Änderung der Raddrehzahl ermittelt wird. Die Tiefe ist beispielsweise proportional zur Amplitude oder kann anhand einer Kalibrierung eingelernt werden.

Weiter kann eine Breite ermittelt werden, etwa indem erkannt wird, ob bei jedem Rad oder nur bei bestimmten Rädern die Fahrbahnunebenheit erkannt wird.

Die Fahrbahnunebenheit kann auch unter Verwendung eines Maschinenlernmodells und/oder statistischen Modells erfolgen.

Weiter können die Informationen bezüglich der Fahrbahnunebenheit an eine Cloud ausgegeben werden. Anhand dieser Informationen kann eine geografische Karte erstellt werden, in welcher die Fahrbahnunebenheiten verzeichnet sind.

Das Ermitteln der Fahrbahnunebenheit kann fahrzeugintern erfolgen, etwa durch Berechnung in einer Steuereinrichtung eines Antiblockiersystems des Kraftfahrzeugs 101. Das Ermitteln der Fahrbahnunebenheit kann jedoch auch zumindest teilweise außerhalb des Kraftfahrzeugs 101 erfolgen, etwa in der Cloud.

## Patentansprüche

1. Verfahren zum Ermitteln und Charakterisieren von Fahrbahnunebenheiten einer Fahrbahn, mit den Schritten:
Erzeugen (S1) von Sensordaten durch mindestens einen Raddrehzahlsensor (103) eines auf der Fahrbahn fahrenden Kraftfahrzeugs (101); und
Ermitteln und Charakterisieren (S2) der Fahrbahnunebenheiten durch eine Recheneinrichtung (3) unter Verwendung der erzeugten Sensordaten, wobei das Charakterisieren der Fahrbahnunebenheit das Ermitteln einer Kantenform der Fahrbahnunebenheit umfasst.
wobei der Raddrehzahlsensor (103) in Abhängigkeit von einer Bewegung eines an einem Rad des Kraftfahrzeugs (101) angeordneten Impulsrades Impulse erfasst,
**dadurch gekennzeichnet, dass**
die Recheneinrichtung (3) anhand von Änderungen der erfassten Impulse in Abhängigkeit von der Zeit einen winkelförmigen Verlauf der Raddrehzahl ermittelt,
und wobei die Recheneinrichtung (3) die Kantenform anhand des ermittelten winkelförmigen Verlaufs der Raddrehzahl ermittelt, wobei der winkelförmige Verlauf der Raddrehzahl die Änderung der Raddrehzahl in Abhängigkeit von dem Winkel ist.

2. Verfahren nach Anspruch 1, wobei weiter Sensordaten durch mindestens einen radindividuellen Beschleunigungssensor (103) des Kraftfahrzeugs (101) erzeugt werden.

3. Verfahren nach Anspruch 1 oder 2, wobei die Recheneinrichtung (3) eine Fahrbahnunebenheit ermittelt, falls ein Betrag einer winkelförmigen Änderung der Raddrehzahl einen ersten Schwellenwert überschreitet und die Kantenform durch Vergleich des Betrags der winkelförmigen Änderung der Raddrehzahl mit mindestens einem zweiten Schwellenwert ermittelt.

4. Verfahren nach Anspruch 2, wobei die Sensordaten des mindestens einen radindividuellen Beschleunigungssensors eine Vertikalbeschleunigung des Rades umfassen, und wobei die Recheneinrichtung (3) die Kantenform der Fahrbahnunebenheit in Abhängigkeit von einem zeitlichen Verlauf der Vertikalbeschleunigung ermittelt.

5. Verfahren nach Anspruch 4, wobei die Recheneinrichtung (3) eine Fahrbahnunebenheit ermittelt, falls ein Betrag der Vertikalbeschleunigung einen ersten Schwellenwert überschreitet und die Kantenform durch Vergleich des Betrags der Vertikalbeschleunigung mit mindestens einem zweiten Schwellenwert ermittelt.

6. Verfahren nach einem der vorangehenden Ansprüche, wobei die Recheneinrichtung (3) anhand der erzeugten Sensordaten ein Frequenzverhalten der Raddrehzahl und/oder einer Vertikalbeschleunigung des Rades berechnet, und wobei die Recheneinrichtung (3) die Kantenform der Fahrbahnunebenheit anhand des berechneten Frequenzverhaltens der Raddrehzahl und/oder der Vertikalbeschleunigung des Rades ermittelt.

7. Verfahren nach einem der vorangehenden Ansprüche, wobei die Recheneinrichtung (3) die Kantenform der Fahrbahnunebenheit unter Verwendung eines Maschinenlernmodells und/oder statistischen Modells ermittelt, welches von den Sensordaten abhängige Eingangsdaten empfängt.

8. Verfahren nach einem der vorangehenden Ansprüche, wobei die Recheneinrichtung (3) eine bezüglich des Kraftfahrzeugs (101) externe Recheneinrichtung (3) ist; und wobei die Sensordaten über eine Schnittstelle (106) des Kraftfahrzeugs (101) an die Recheneinrichtung (3) ausgegeben werden.

9. Verfahren nach einem der vorangehenden Ansprüche, wobei die Recheneinrichtung (3) eine Steuereinrichtung eines Antiblockiersystems des Kraftfahrzeugs (101) ist.

10. Vorrichtung (1) zum Ermitteln und Charakterisieren von Fahrbahnunebenheiten einer Fahrbahn, mit:
einer Schnittstelle (2), welche dazu ausgebildet ist, erzeugte Sensordaten von mindestens einem Raddrehzahlsensor (103) eines auf der Fahrbahn fahrenden Kraftfahrzeugs (101) zu empfangen, wobei der Raddrehzahlsensor (103) in Abhängigkeit von einer Bewegung eines an einem Rad des Kraftfahrzeugs (101) angeordneten Impulsrades Impulse erfasst; und
einer Recheneinrichtung (3), welche dazu ausgebildet ist, die Fahrbahnunebenheiten unter Verwendung der erzeugten Sensordaten zu ermitteln und zu charakterisieren,
wobei das Charakterisieren der Fahrbahnunebenheit das Ermitteln einer Kantenform der Fahrbahnunebenheit umfasst;
**dadurch gekennzeichnet, dass**
die Recheneinrichtung (3) dazu ausgebildet ist, anhand von Änderungen der erfassten Impulse in Abhängigkeit von der Zeit einen winkelförmigen Verlauf der Raddrehzahl zu ermitteln, und wobei die Recheneinrichtung (3) dazu ausgebildet ist,
die Kantenform anhand des ermittelten winkelförmigen Verlaufs der Raddrehzahl zu ermitteln, wobei der winkelförmige Verlauf der Raddrehzahl die Änderung der Raddrehzahl in Abhängigkeit von dem Winkel ist.

## Claims

1. Method for identifying and characterizing road bumps in a road, comprising the steps of:
generating (S1) sensor data by way of at least one wheel speed sensor (103) of a motor vehicle (101) travelling on the road; and
identifying and characterizing (S2) the road bumps by way of a computing device (3) using the generated sensor data, characterization of the road bump comprising determination of an edge shape of the road bump,
the wheel speed sensor (103) detecting pulses on the basis of a movement of a pulse wheel arranged on a wheel of the motor vehicle (101),
**characterized in that**
the computing device (3) takes changes in the detected pulses as a function of time as a basis for determining an angular characteristic of the wheel speed, and the computing device (3) determines the edge shape on the basis of the determined angular characteristic of the wheel speed, the angular characteristic of the wheel speed being the change in the wheel speed as a function of the angle.

2. Method according to Claim 1, wherein sensor data are, further, generated by at least one wheel-individual acceleration sensor (103) of the motor vehicle (101).

3. Method according to Claim 1 or 2, wherein the computing device (3) identifies a road bump if an absolute value of an angular change in the wheel speed exceeds a first threshold value, and determines the edge shape by comparing the absolute value of the angular change of the wheel speed with at least a second threshold value.

4. Method according to Claim 2, wherein the sensor data of the at least one wheel-individual acceleration sensor comprise a vertical acceleration of the wheel, and wherein the computing device (3) determines the edge shape of the road bump on the basis of a time characteristic of the vertical acceleration.

5. Method according to Claim 4, wherein the computing device (3) determines a road bump if an absolute value of the vertical acceleration exceeds a first threshold value, and determines the edge shape by comparing the absolute value of the vertical acceleration with at least one second threshold value.

6. Method according to one of the preceding claims, wherein the computing device (3) takes the generated sensor data as a basis for computing a frequency response of the wheel speed and/or of a vertical acceleration of the wheel, and wherein the computing device (3) determines the edge shape of the road bump on the basis of the computed frequency response of the wheel speed and/or the vertical acceleration of the wheel.

7. Method according to one of the preceding claims, wherein the computing device (3) determines the edge shape of the road bump using a machine learning model and/or statistical model that receives input data dependent on the sensor data.

8. Method according to one of the preceding claims, wherein the computing device (3) is an external computing device (3) with respect to the motor vehicle (101); and
wherein the sensor data are output to the computing device (3) via an interface (106) of the motor vehicle (101).

9. Method according to one of the preceding claims, wherein the computing device (3) is a control device of an anti-lock braking system of the motor vehicle (101).

10. Device (1) for identifying and characterizing road bumps in a road, comprising:
an interface (2) designed to receive generated sensor data from at least one wheel speed sensor (103) of a motor vehicle (101) travelling on the road, the wheel speed sensor (103) detecting pulses on the basis of a movement of a pulse wheel arranged on a wheel of the motor vehicle (101); and
a computing device (3) designed to identify and characterize the road bumps using the generated sensor data, characterization of the road bump comprising determination of an edge shape of the road bump;
**characterized in that**
the computing device (3) is designed to take changes in the detected pulses as a function of time as a basis for determining an angular characteristic of the wheel speed, and the computing device (3) is designed to determine the edge shape on the basis of the determined angular characteristic of the wheel speed, the angular characteristic of the wheel speed being the change in the wheel speed as a function of the angle.

## Revendications

1. Procédé pour déterminer et caractériser des irrégularités de chaussée d'une chaussée, comprenant les étapes suivantes :
génération (S1) de données de capteur par au moins un capteur de vitesse de rotation de roue (103) d'un véhicule automobile (101) roulant sur la chaussée ; et
détermination et caractérisation (S2) des irrégularités de la chaussée par un dispositif de calcul (3) en utilisant les données de capteur générées, la caractérisation de l'irrégularité de la chaussée comprenant la détermination d'une forme de bord de l'irrégularité de la chaussée,
le capteur de vitesse de rotation de roue (103) détectant des impulsions en fonction d'un mouvement d'une roue à impulsions disposée sur une roue du véhicule automobile (101),
**caractérisé en ce que**
le dispositif de calcul (3) détermine, à l'aide des variations des impulsions détectées en fonction du temps, un tracé angulaire de la vitesse de rotation de roue, et le dispositif de calcul (3) déterminant la forme de bord à l'aide du tracé angulaire déterminé de la vitesse de rotation de roue, le tracé angulaire de la vitesse de rotation de roue étant la variation de la vitesse de rotation de roue en fonction de l'angle.

2. Procédé selon la revendication 1, des données de capteur supplémentaires étant générées au moyen d'au moins un capteur d'accélération (103) individuel de roue du véhicule automobile (101).

3. Procédé selon la revendication 1 ou 2, le dispositif de calcul (3) déterminant une irrégularité de la chaussée dans le cas où une valeur d'une variation angulaire de la vitesse de rotation de roue dépasse une première valeur seuil et déterminant la forme de bord en comparant la valeur de la variation angulaire de la vitesse de rotation de roue à au moins une deuxième valeur seuil.

4. Procédé selon la revendication 2, les données du capteur de l'au moins un capteur d'accélération individuel de roue comprenant une accélération verticale de la roue, et le dispositif de calcul (3) déterminant la forme de bord de l'irrégularité de la chaussée en fonction d'une évolution temporelle de l'accélération verticale.

5. Procédé selon la revendication 4, le dispositif de calcul (3) déterminant une irrégularité de la chaussée dans le cas où une valeur de l'accélération verticale dépasse une première valeur seuil et déterminant la forme de bord en comparant la valeur de l'accélération verticale à au moins une deuxième valeur seuil.

6. Procédé selon l'une des revendications précédentes, le dispositif de calcul (3) calculant, à l'aide des données de capteur générées, un comportement en fréquence de la vitesse de rotation de roue et/ou d'une accélération verticale de la roue et le dispositif de calcul (3) déterminant la forme de bord de l'irrégularité de la chaussée à l'aide du comportement en fréquence calculé de la vitesse de rotation de roue et/ou de l'accélération verticale de la roue.

7. Procédé selon l'une des revendications précédentes, le dispositif de calcul (3) déterminant la forme de bord de l'irrégularité de la chaussée en utilisant un modèle d'apprentissage automatique et/ou un modèle statistique, lequel reçoit des données d'entrée dépendantes des données de capteur.

8. Procédé selon l'une des revendications précédentes, le dispositif de calcul (3) étant un dispositif de calcul (3) externe par rapport au véhicule automobile (101) ; et
les données de capteur étant délivrées au dispositif de calcul (3) par le biais d'une interface (106) du véhicule automobile (101).

9. Procédé selon l'une des revendications précédentes, le dispositif de calcul (3) étant un dispositif de commande d'un système antiblocage du véhicule automobile (101).

10. Système (1) pour déterminer et caractériser des irrégularités de chaussée d'une chaussée, comprenant :
une interface (2), laquelle est configurée pour recevoir des données de capteur générées par au moins un capteur de vitesse de rotation de roue (103) d'un véhicule automobile (101) roulant sur la chaussée, le capteur de vitesse de rotation de roue (103) détectant des impulsions en fonction d'un mouvement d'une roue à impulsions disposée sur une roue du véhicule automobile (101) ; et
un dispositif de calcul (3), lequel est configuré pour déterminer et pour caractériser les irrégularités de chaussée en utilisant les données de capteur générées, la caractérisation de l'irrégularité de chaussée comprenant la détermination d'une forme de bord de l'irrégularité de chaussée ;
**caractérisé en ce que**
le dispositif de calcul (3) est configuré pour déterminer, à l'aide des variations des impulsions détectées en fonction du temps, un tracé angulaire de la vitesse de rotation de roue, et le dispositif de calcul (3) étant configuré pour déterminer la forme de bord à l'aide du tracé angulaire déterminé de la vitesse de rotation de roue, le tracé angulaire de la vitesse de rotation de roue étant la variation de la vitesse de rotation de roue en fonction de l'angle.
